(19) Europäisches Patentamt
European Patent Office
Office européen des brevets

(11) **EP 4 707 345 A1**

(12) **EUROPEAN PATENT APPLICATION**

(43) Date of publication:
**11.03.2026 Bulletin 2026/11**

(21) Application number: **24199153.8**

(22) Date of filing: **09.09.2024**

(51) International Patent Classification (IPC):
**C09D 5/33** *(2006.01)*　　**B05D 7/00** *(2006.01)*
**C08J 7/04** *(2020.01)*　　**C09D 5/32** *(2006.01)*
**C09D 7/61** *(2018.01)*　　**C09D 175/04** *(2006.01)*

(52) Cooperative Patent Classification (CPC):
(C-Sets available)
**C09D 5/004; B64C 1/00; B64F 1/00; C08J 7/042;
C09D 5/32; C09D 7/61;** B05D 5/00; B05D 7/54;
B05D 2201/00; B05D 2503/00; B05D 2601/02;
B05D 2602/00; C08K 3/04; C08K 2003/2241

(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **The Boeing Company
Arlington, VA 22202 (US)**

(72) Inventors:
• **SEEBERGH, Jill E.
Arlington, 22202 (US)**
• **SCHULTZ, Karen A.
Arlington, 22202 (US)**

• **OLSON, Nels A.
Arlington, 22202 (US)**
• **VAHEY, Paul G.
Arlington, 22202 (US)**
• **STRAUS, Lori C.
Arlington, 22202 (US)**
• **KIRCHNER, James F.
Arlington, 22202 (US)**
• **DAVIS, Bruce R.
Arlington, 22202 (US)**

(74) Representative: **Snaith, James Michael et al
Kilburn & Strode LLP
Lacon London
84 Theobalds Road
London WC1X 8NL (GB)**

(54) **TWO-LAYER COATING SYSTEMS FOR COMPOSITE PROTECTION**

(57) A two-layer coating system for an epoxy composite component is presented. The two-layer coating system comprises a first layer configured to prevent transmission of at least one of ultraviolet light or visible light within desired wavelengths, and a second layer in contact with the first layer and configured to reflect infrared components of sunlight. The first layer comprises a polyurethane with carbon black. The second layer comprises a polyurethane with titanium dioxide. The first layer is positioned between the second layer and the epoxy composite component.

FIG. 1

EP 4 707 345 A1

(52) Cooperative Patent Classification (CPC): (Cont.)

C-Sets
**C09D 175/04, C08K 3/04**

**Description**

**BACKGROUND** INFORMATION

1. Field:

The present disclosure relates generally to coatings and more specifically to two-layer coatings for composite materials.

2. Background:

Fiber-reinforced composite materials can be used for platforms including buildings or large vehicles such as aircraft, ships, cars, trains, and other modes of transportation. Operating environments for vehicles comprising fiber-reinforced composite materials can cause degradation of the fiber-reinforced composite materials if the fiber-reinforced composite materials are exposed to the operating environment.

Therefore, it would be desirable to have a method and apparatus that takes into account at least some of the issues discussed above, as well as other possible issues. Specifically, it would be desirable to provide coating systems for protection of fiber-reinforced composite materials from operating conditions.

**SUMMARY**

An embodiment of the present disclosure provides a two-layer coating system for an epoxy composite component. The two-layer coating system comprises a first layer configured to prevent transmission of at least one of ultraviolet light or visible light within desired wavelengths, and a second layer in contact with the first layer and configured to reflect infrared components of sunlight. The first layer comprises a polyurethane with carbon black. The second layer comprises a polyurethane with titanium dioxide. The first layer is positioned between the second layer and the epoxy composite component.

Another embodiment of the present disclosure provides an aircraft. The aircraft comprises an epoxy composite component, and a two-layer coating system on the epoxy composite component. The two-layer coating system comprises a first layer configured to prevent transmission of at least one of ultraviolet light or visible light within desired wavelengths, and a second layer configured to reflect infrared components of sunlight. The first layer comprises a polyurethane with carbon black. The second layer comprises a polyurethane with titanium dioxide. The first layer is positioned between the second layer and the epoxy composite component.

Another embodiment of the present disclosure provides a two-layer coating system for an epoxy composite component. The two-layer coating system comprises a first layer configured to prevent transmission of at least one of ultraviolet light or visible light within desired wavelengths and comprising between 0.8-4.5 wt% carbon black, and a second layer configured to provide a desired solar absorptivity and comprising between 16 wt% - 41 wt% titanium dioxide. The second layer is in contact with the first layer, and the first layer is positioned between the second layer and the epoxy composite component.

The features and functions can be achieved independently in various embodiments of the present disclosure or may be combined in yet other embodiments in which further details can be seen with reference to the following description and drawings.

**BRIEF DESCRIPTION OF THE DRAWINGS**

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:

**Figure 1** is an illustration of an aircraft in accordance with an illustrative embodiment;
**Figure 2** is an illustration of a block diagram of a platform with a two-layer coating in an operating environment in accordance with an illustrative embodiment;
**Figure 3** is an illustration of a cross-sectional view of a two-layer coating on an epoxy composite material in accordance with an illustrative embodiment;
**Figure 4** is an illustration of an aircraft manufacturing and service method in a form of a block diagram in accordance with an illustrative embodiment; and
**Figure 5** is an illustration of an aircraft in a form of a block diagram in which an illustrative embodiment may be implemented.

## DETAILED DESCRIPTION

The illustrative examples recognize and take into account several considerations. The illustrative embodiments recognize and take into account that components made out of fiber-reinforced composite materials can be susceptible to degradation upon exposure to combinations of electromagnetic radiation, moisture, and heat. The illustrative embodiments recognize and take into account that it is desirable to protect fiber-reinforced composite materials from components of sunlight.

The illustrative embodiments recognize and take into account that it is desirable to protect fiber-reinforced composite materials without undesirably impacting other material characteristics or operating standards for a respective platform. The illustrative examples recognize and take into account that aircraft have several operating standards set by regulatory agencies. Additionally, the illustrative examples recognize and take into account that it is undesirable to increase weight of aircraft. The illustrative embodiments recognize and take into account that substantially increasing the thickness of coatings can increase the risk of cracking, will add weight, and may not meet electromagnetic effect (EME) standards for aircraft.

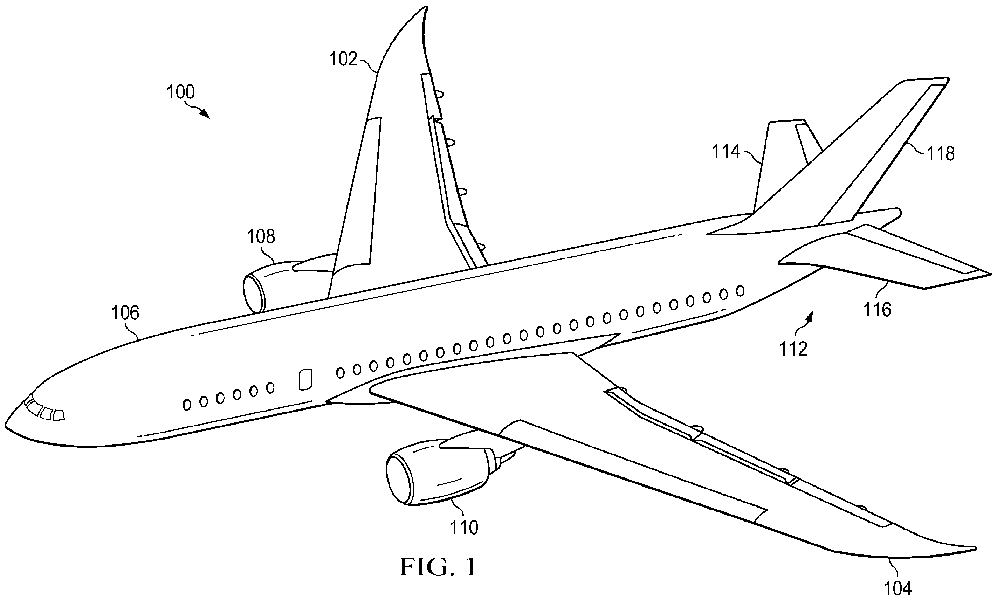

Turning now to **Figure 1,** an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have coatings configured to protect composite materials from ultraviolet light or visible light degradation. Coatings of the illustrative examples can be present on at least one of wing **102,** wing **104,** body **106,** or tail section **112.** In some illustrative examples, two-layer coating systems as described can be present on horizontal stabilizer **114** or horizontal stabilizer **116.**

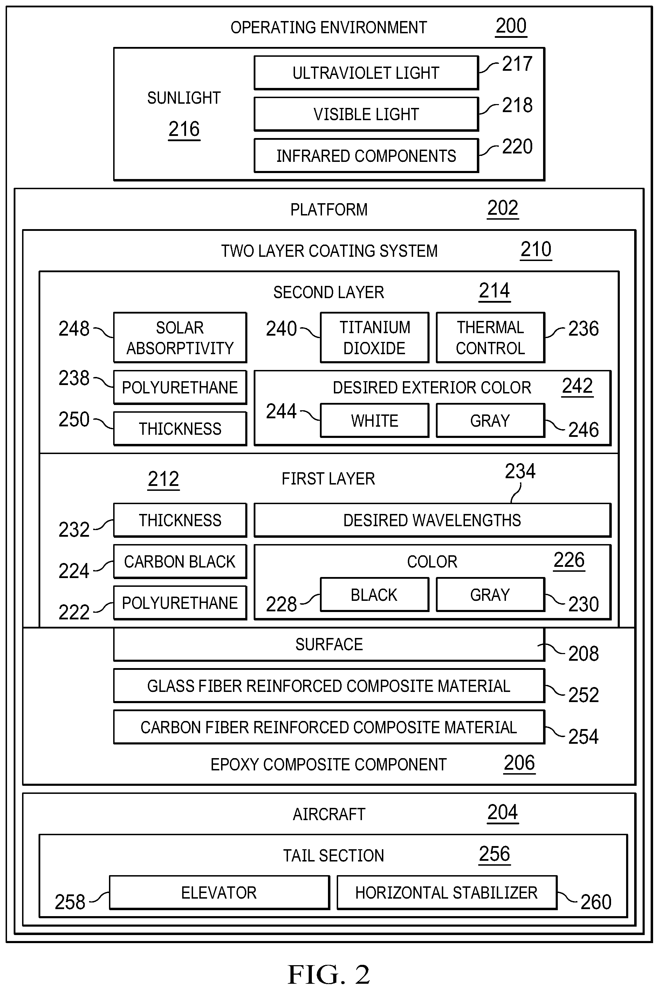

Turning now to **Figure 2,** an illustration of a block diagram of an operating environment is depicted in accordance with an illustrative embodiment. Platform **202** is present in operating environment **200** and exposed to sunlight **216.** Platform **202** can take any desirable form.

Two-layer coating system **210** provides protection for epoxy composite component **206** of platform **202.** Two-layer coating system **210** protects epoxy composite component **206** from sunlight **216.** Two-layer coating system **210** comprises first layer **212** configured to prevent transmission of at least one of ultraviolet light **217** or visible light **218** within desired wavelengths **234** and second layer **214** in contact with first layer **212** and configured to reflect infrared components **220** of sunlight **216.** First layer **212** comprises polyurethane **222** with carbon black **224.**

Second layer **214** is exposed to operating environment **200.** As a result, sunlight **216** strikes second layer **214.** Second layer **214** is positioned on top of first layer **212** and covers first layer **212.**

Second layer **214** comprises polyurethane **238** with titanium dioxide **240.** First layer **212** is between second layer **214** and epoxy composite component **206.**

Epoxy composite component **206** comprises a fiber-reinforced matrix material. In some illustrative examples, fiber-reinforced materials comprise at least one of carbon fibers, boron fibers, glass fibers, aramid fibers, polymer fibers, or other desirable reinforcing fibers. In some illustrative examples, an epoxy composite material comprises at least one of a novolac epoxy, an aromatic epoxy, an aliphatic epoxy, or a cyclic epoxy. Currently, epoxy resin systems may incorporate multi-functional epoxy systems with di-functional epoxy systems to achieve a polymeric matrix with both improved tensile strength and compression-after-impact (CAI). The di-functional epoxy resin may be saturated, unsaturated, cycloaliphatic, aromatic, alicyclic, or heterocyclic. Examples of the di-functional epoxy resins may be those based on diglycidyl ether or Bisphenol F, Bisphenol A, phenol, and cresol epoxy novolacs, glycidyl ethers of phenol-aldehyde adducts, glycidyl ethers of aliphatic diols, diglycidyl ether, diethylene glycol diglycidyl ether, aromatic epoxy resins, aliphatic polyglycidyl ethers, epoxidised olefins, aromatic glycidyl amines, heterocyclic glycidyl imidines and amides, glycidyl ethers, or any combination thereof. The preferable di-functional epoxy resin may be from diglycidyl ether of Bisphenol F, diglycidyl ether of Bisphenol A, diglycidyl dihydroxy naphthalene, or any combination thereof.

In some illustrative examples, epoxy composite component **206** comprises carbon fiber-reinforced epoxy composite material **254.** In some illustrative examples, epoxy composite component **206** comprises a glass fiber-reinforced epoxy composite material **252.**

Surface **208** is an exterior surface of epoxy composite component **206.** In some illustrative examples, first layer **212** is in contact with surface **208** of epoxy composite component **206.** In some illustrative examples, a surfacing film or primer is present between surface **208** and first layer **212.**

In some illustrative examples, second layer **214** is an exterior surface of platform **202.** In some illustrative examples, second layer **214** has desired exterior color **242** for performance. In some illustrative examples, second layer **214** is white **244** or gray **246.** In some illustrative examples, second layer **214** provides thermal control **236** for two-layer coating system **210** through controlled solar absorptivity **248.** Solar absorptivity **248** can be assessed using any desirable standard set forth by a materials or regulatory society such as the American Society for Testing and Materials. In some illustrative examples, solar absorptivity **248** can be assessed using ASTM E903-20.

In some illustrative examples, second layer **214** provides solar absorptivity **248** in a range of 0.21-0.23. In some illustrative examples, second layer **214** provides solar absorptivity **248** in a range of 0.58-0.67.

In some illustrative examples, first layer **212** is black **228** or gray **230.** In some illustrative examples, first layer **212** blocks transmission of at least one of ultraviolet light **217** or visible light **218** through scattering. In some illustrative examples, desired wavelengths **234** are in a range of 300-500 nm. In some illustrative examples, desired wavelengths **234** are in a range of 300-800 nm.

In some illustrative examples, first layer **212** comprises a black additive or colorant such as carbon black **224,** graphite, or the like. In some illustrative examples, first layer **212** comprises carbon black **224.** In these illustrative examples, the amount of carbon black **224** is configured to block transmission of at least one of ultraviolet light **217** or visible light **218** in desired wavelengths **234.** In some illustrative examples, first layer comprises **212** carbon black **224** in a range of 0.8-4.5 wt%. In some illustrative examples, first layer **212** comprises carbon black **224** in a range of 1-4 wt%. In some illustrative examples, first layer **212** comprises carbon black **224** in a range of 1-3 wt%. In some illustrative examples, color **226** of first layer **212** is darker than exterior color **242** of second layer **214.**

In some illustrative examples, second layer **214** is a lighter color, such as white, and has the property of low solar absorptivity. Second layer **214** comprises a white colorant such as titanium dioxide **240** (aka, titania or $TiO_2$) in the rutile or anatase form, antimony white, zinc white, silicon dioxide, or the like. In some illustrative examples, second layer **214** comprises titanium dioxide **240** in a range of 16 wt% - 41 wt%. In some illustrative examples, second layer **214** comprises titanium dioxide **240** in a range of 20 wt% - 41 wt%. In some illustrative examples, second layer **214** comprises titanium dioxide **240** in a range of 16 wt% - 21 wt%.

Thickness **232** of first layer **212** is selected to provide a desired amount of blocking of at least one of ultraviolet light **217** or visible light **218.** Thickness **232** of first layer **212** is selected to provide desired material properties for two-layer coating system **210.** In some illustrative examples, thickness **232** is selected based on at least one of a desired weight, a desired EME performance, and desired flexibility performance of two-layer coating system **210.**

In some illustrative examples, first layer **212** comprises thickness **232** between 1.0-2.5 mils. In some illustrative examples, first layer **212** comprises thickness **232** between 1.0-2.0 mils.

Thickness **250** of second layer **214** is selected to provide reflection of infrared components **220** of sunlight **216.** Thickness **250** of second layer **214** is selected to provide desired material properties for two-layer coating system **210.** In some illustrative examples, thickness **250** is selected based on at least one of a desired weight, a desired electromagnetic effect (EME) performance, and desired flexibility performance of two-layer coating system **210.**

A thickness can be measured using any desirable standard set forth by a materials or regulatory society such as the American Society for Testing and Materials. In some illustrative examples, thickness **232** and thickness **250** can be assessed using ASTM D4138-07a(2022).In some illustrative examples, second layer **214** comprises thickness **250** between 2.0-3.6 mils. In some illustrative examples, second layer **214** comprises thickness **250** between 2.4-3.2 mils.

In some illustrative examples, first layer **212** comprises thickness **232** between 1.0-2.5 mils, and second layer **214** comprises thickness **232** between 2.0-3.6 mils. In some illustrative examples, first layer **212** comprises a thickness between 1.0-2.0 mils, and wherein the second layer comprises a thickness between 2.4-3.2 mils.

In some illustrative examples, platform **202** takes the form of aircraft **204.** In these illustrative examples, aircraft **204** comprises epoxy composite component **206** and two-layer coating system **210** on epoxy composite component **206.** Two-layer coating system **210** comprises first layer **212** configured to prevent transmission of at least one of ultraviolet light **217** or visible light **218** within desired wavelengths **234** and second layer **214** configured to reflect infrared components **220** of sunlight **216.** First layer **212** comprises polyurethane **222** with carbon black **224.** Second layer **214** comprises polyurethane **238** with titanium dioxide **240.** First layer **212** is between second layer **214** and epoxy composite component **206.**

Epoxy composite component **206** can take the form of any desirable component or portion of a component of platform **202.** In some illustrative examples, epoxy composite component **206** is part of tail section **256** of aircraft **204.** In some illustrative examples, epoxy composite component **206** is horizontal stabilizer **260.** In some illustrative examples, epoxy composite component **206** is elevator **258** in tail section **256** of aircraft **204.**

In some illustrative examples, two-layer coating system **210** for epoxy composite component **206** comprises first layer **212** configured to prevent transmission of at least one of ultraviolet light **217** or visible light **218** within desired wavelengths **234** and comprising between 0.8-4.5 wt% carbon black **224,** and second layer **214** configured to provide desired solar absorptivity **248** and comprising between 16 wt% - 41 wt% titanium dioxide **240.** Second layer **214** is in contact with first layer **212.** First layer **212** is between second layer **214** and epoxy composite component **206.** In some illustrative examples, one or more additional materials can be present between first layer **212** and second layer **214.** In some illustrative examples, one or more additional materials can be present between first layer **212** and epoxy composite component **206.** In some illustrative examples, second layer **214** has desired exterior color **242** for performance.

Two-layer coating system **210** of **Figure 2** can be applied by at least one of spraying, inkjet printing, wiping, rolling, or any other desirable application method. First layer and second layer can be applied in a liquid form to epoxy composite component **206.** In some illustrative examples, first layer **212** can be applied and cured prior to applying second layer **214.**

The illustration of operating environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment. For example, a surfacing film or primer could be present between surface **208** and first layer **212.** As another example, although not depicted in **Figure 2,** epoxy composite component **206** can be at least a portion of a fuselage or a wing. In some illustrative examples, epoxy composite component **206** is one of a fuselage, a wing, or a portion of tail section 256 of aircraft **204.**

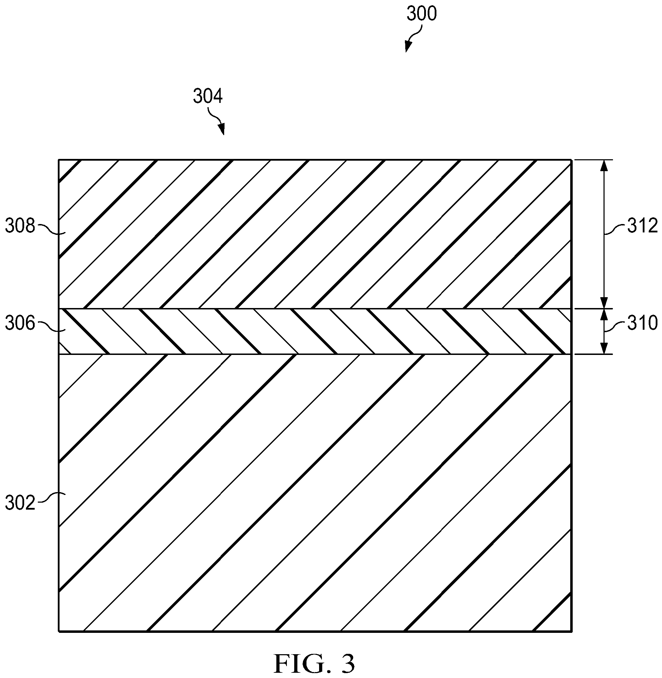

Turning now to **Figure 3,** an illustration of a cross-sectional view of a two-layer coating on an epoxy composite material is depicted in accordance with an illustrative embodiment. Epoxy composite component **302** is a physical implementation of epoxy composite component **206** of **Figure 2.** Two-layer coating system **304** is present over epoxy composite component **206.** Two-layer coating system **304** protects epoxy composite component **206** from degradation due to sunlight exposure. Two-layer coating system **304** is a physical implementation of two-layer coating system **210** of **Figure 2.** View **300** is a cross-sectional view of two layer coating system **304** on epoxy composite component **302.**

Two-layer coating system **304** comprises first layer **306** and second layer **308.** In this illustrative example, first layer **306** is in contact with epoxy composite component **302.** In some non-depicted examples, a surfacing film or primer can be present between epoxy composite component **206** and first layer **306.**

First layer **306** protects epoxy composite component **302** from at least one of ultraviolet light or visible light within desired wavelengths. First layer **306** prevents or significantly reduces transmission of at least one of ultraviolet light or visible light within the desired wavelengths. First layer **306** at least one of absorbs or reflects at least one of ultraviolet light or visible light within the desired wavelengths. First layer **306** provides desirable blocking properties to the desired wavelengths. In some illustrative examples, first layer **306** provides protection to epoxy composite component **302** through scattering.

Second layer **308** is in contact with first layer **306.** Second layer **308** provides thermal protection for epoxy composite component **302** while first layer **306** provides protection against at least one of ultraviolet light or visible light. In some illustrative examples, first layer **306** provides protection using scattering. In some illustrative examples, second layer **308** provides protection against infrared components of sunlight using solar absorptivity.

As depicted, first layer **306** is darker in color than second layer **308.** In some illustrative examples, second layer **308** is white. In some other illustrative examples, second layer **308** is gray. In some illustrative examples, first layer **306** is black. In some other illustrative examples, first layer **306** is gray. In some illustrative examples, second layer **308** is a lighter gray than first layer **306.**

Epoxy composite component **302** with two-layer coating system **304** is resistant to degradation from cyclic exposure to at least one of ultraviolet light or visible light and moisture. Epoxy composite component **302** with two-layer coating system **304** meets desired standards for solar absorptivity, color, and crack resistance. First layer **306** and second layer **308** are arranged in a specific order and have thickness **310** and thickness **312** configured to at least one of selectively absorb or reflect specific wavelengths of solar radiation while meeting the other desired coating characteristics. In some illustrative examples, two-layer coating system **304** meets a desired standard for corrosion resistance.

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

Weight percentages ("wt%"), as recited herein in the context of a particular component of the first layer or second layer, are calculated on a dry weight basis as follows:

$$wt\% = \frac{weigh \ \ of \ particular \ component}{total \ weigh \ \ of \ all \ dry \ components \ of \ the \ layer} \times 100\%$$

It will be understood that the calculation of weight percentages does not include the weight of any solvent present in a liquid form of the layer (e.g. prior to application onto an epoxy composite component).

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional.

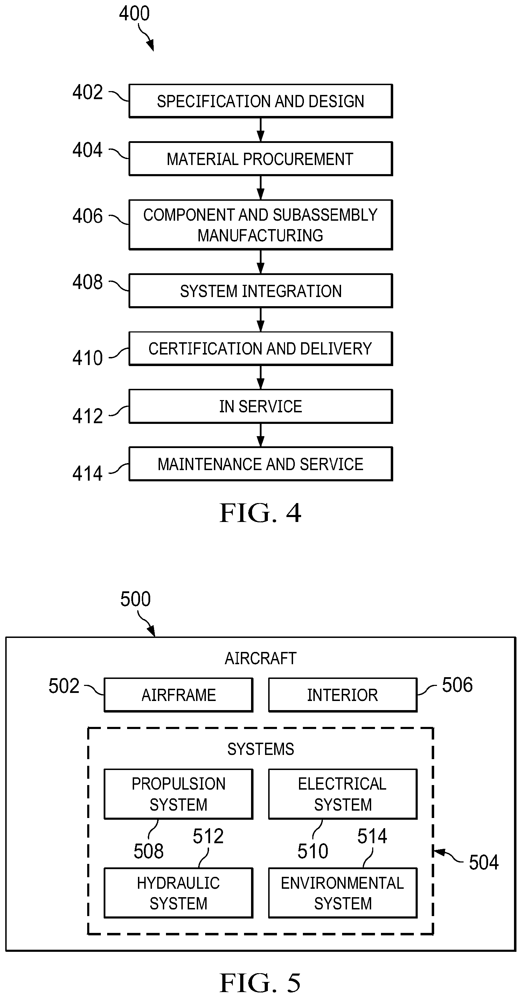

Illustrative embodiments of the present disclosure may be described in the context of aircraft manufacturing and service method **400** as shown in **Figure 4** and aircraft **500** as shown in **Figure 5.** Turning first to **Figure 4,** an illustration of an aircraft manufacturing and service method in a form of a block diagram is depicted in accordance with an illustrative embodiment. During pre-production, aircraft manufacturing and service method **400** may include specification and design **402** of aircraft **500** in **Figure 5** and material procurement **404.**

During production, component and subassembly manufacturing **406** and system integration **408** of aircraft **.500** takes place. Thereafter, aircraft **500** may go through certification and delivery **410** in order to be placed in service **412.** While in service **412** by a customer, aircraft **500** is scheduled for routine maintenance and service **414,** which may include modification, reconfiguration, refurbishment, or other maintenance and service.

Each of the processes of aircraft manufacturing and service method **400** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 5,** an illustration of an aircraft in a form of a block diagram is depicted in which an illustrative embodiment may be implemented. In this example, aircraft **500** is produced by aircraft manufacturing and service method **400** of **Figure 4** and may include airframe **502** with plurality of systems **504** and interior **506.** Examples of systems **504** include one or more of propulsion system **508,** electrical system **510,** hydraulic system **512,** and environmental system **514.** Any number of other systems may be included.

Apparatuses and methods embodied herein may be employed during at least one of the stages of aircraft manufacturing and service method **400.** One or more illustrative embodiments may be manufactured or used during at least one of component and subassembly manufacturing **406,** system integration **408,** in service **412,** or maintenance and service **414** of **Figure 4.**

The illustrative examples present a two-layer coating system that protects an epoxy composite component. The two-layer coating system protects the epoxy composite component from degradation from cyclic exposure to at least one of ultraviolet light or visible light and moisture while meeting standards for solar absorptivity, color, crack resistance. Layers are arranged in a specific order and with a specific thickness within the two-layer coating system to selectively absorb and/or reflect specific wavelengths of solar radiation while meeting the other standards for purpose.

The disclosure also comprises the following clauses, which may be claimed:

1. A two-layer coating system for an epoxy composite component comprising:

a first layer configured to prevent transmission of at least one of ultraviolet light or visible light within desired wavelengths, the first layer comprising a polyurethane with carbon black; and
a second layer thereover and in contact with the first layer and configured to reflect infrared components of sunlight, the second layer comprising a polyurethane with titanium dioxide, wherein the first layer is positioned between the second layer and the epoxy composite component.

2. The two-layer coating system of clause 1, wherein the second layer has a desired exterior color for performance.

3. The two-layer coating system of clause 1 or 2, wherein the second layer is white or gray.

4. The two-layer coating system of any preceding clause, wherein the first layer is black or gray.

5. The two-layer coating system of any preceding clause, wherein the first layer comprises carbon black in a range of 0.8-4.5 wt%.

6. The two-layer coating system of any preceding clause, wherein the second layer comprises titanium dioxide in a range of 16 wt% - 41 wt%.

7. The two-layer coating system of any preceding clause, wherein the second layer comprises titanium dioxide in a range of 20 wt% - 41 wt%.

8. The two-layer coating system of any one of clauses 1-6, wherein the second layer comprises titanium dioxide in a range of 16 wt% - 21 wt%.

9. The two-layer coating system of any preceding clause, wherein the first layer comprises a thickness between 1.0-2.5 mils.

10. The two-layer coating system of any preceding clause, wherein the second layer comprises a thickness between 2.0-3.6 mils.

11. The two-layer coating system of any preceding clause, wherein the first layer comprises a thickness between 1.0-2.0 mils.

12. The two-layer coating system of any preceding clause, wherein the second layer comprises a thickness between 2.4-3.2 mils.

13. The two-layer coating system of any preceding clause, wherein the first layer blocks transmission of at least one of ultraviolet light or visible light through scattering.

14. The two-layer coating system of any preceding clause, wherein the second layer provides thermal control for two-layer coating system through controlled solar absorptivity.

15. The two-layer coating system of any preceding clause, wherein the second layer provides a solar absorptivity in a range of 0.21-0.23.

16. The two-layer coating system of any preceding clause, wherein the second layer provides a solar absorptivity in a range of 0.58-0.67.

17. The two-layer coating system of any preceding clause, wherein the desired wavelengths are in a range of 300-500 nm.

18. An aircraft comprising:

    an epoxy composite component; and
    a two-layer coating system on the epoxy composite component, the two-layer coating system comprising:

        a first layer configured to prevent transmission of at least one of ultraviolet light or visible light within desired wavelengths, the first layer comprising a polyurethane with carbon black, and
        a second layer configured to reflect infrared components of sunlight, the second layer comprising a polyurethane with titanium dioxide, wherein the first layer is positioned between the second layer and the epoxy composite component.

19. The aircraft of clause 18, wherein the epoxy composite component comprises a carbon fiber-reinforced epoxy composite material.

20. The aircraft of clause 18 or 19, wherein the epoxy composite component comprises a glass fiber-reinforced epoxy composite material.

21. The aircraft of any one of clauses 18-20, wherein the epoxy composite component is a horizontal stabilizer.

22. The aircraft of any one of clauses 18-20, wherein the epoxy composite component is an elevator in a tail section of the aircraft.

23. The aircraft of any one of clauses 18-20, wherein the epoxy composite component is one of a fuselage, a wing, or a portion of a tail section of the aircraft.

24. The aircraft of any one of clauses 18-23, wherein the epoxy composite component comprises at least one of carbon fibers, boron fibers, glass fibers, or aramid fibers.

25. The aircraft of any one of clauses 18-24, wherein the first layer comprises a thickness between 1.0-2.5 mils, and wherein the second layer comprises a thickness between 2.0-3.6 mils.

26. The aircraft of any one of clauses 18-25, wherein the first layer comprises a thickness between 1.0-2.0 mils, and wherein the second layer comprises a thickness between 2.4-3.2 mils.

27. The aircraft of any one of clauses 18-26, wherein the first layer comprises carbon black in a range of 0.8 wt% - 4.5 wt%.

28. The aircraft of any one of clauses 18-27, wherein the second layer comprises titanium dioxide in a range of 16 wt% - 41 wt%.

29. The aircraft of any one of clauses 18-28, wherein the desired wavelengths are in a range of 300-500 nm.

30. A two-layer coating system for an epoxy composite component comprising:

a first layer configured to prevent transmission of at least one of ultraviolet light or visible light within desired wavelengths and comprising between 0.8-4.5 wt% carbon black; and
a second layer configured to provide a desired solar absorptivity and comprising between 16 wt% - 41 wt% titanium dioxide, the second layer in contact with the first layer, wherein the first layer is positioned between the second layer and the epoxy composite component.

31. The two-layer coating system of clause 30, wherein the second layer has a desired exterior color for performance.

32. The two-layer coating system of clause 30 or 31, wherein the first layer comprises a thickness between 1.0-2.5 mils, and wherein the second layer comprises a thickness between 2.0-3.6 mils.

33. The two-layer coating system of any one of clauses 30-32, wherein the first layer comprises a thickness between 1.0-2.0 mils, and wherein the second layer comprises a thickness between 2.4-3.2 mils.

34. The two-layer coating system of any one of clauses 30-33, wherein the desired wavelengths are in a range of 300-500 nm.

35. The two-layer coating system of any one of clauses 30-33, wherein the desired wavelengths are in a range of 300-800 nm.

The description of the different illustrative embodiments has been presented for purposes of illustration and description and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

**Claims**

1. A two-layer coating system for an epoxy composite component comprising:

a first layer configured to prevent transmission of at least one of ultraviolet light or visible light within desired wavelengths, the first layer comprising a polyurethane with carbon black; and
a second layer thereover and in contact with the first layer and configured to reflect infrared components of sunlight, the second layer comprising a polyurethane with titanium dioxide, wherein the first layer is positioned between the second layer and the epoxy composite component.

2. The two-layer coating system of claim 1, wherein:

(a) the second layer has a desired exterior color for performance, optionally wherein the second layer is white or gray; and/or
(b) the first layer is black or gray.

3. The two-layer coating system of claim 1 or 2, wherein the first layer comprises carbon black in a range of approximately 0.8 wt%-4.5 wt%.

4. The two-layer coating system of any preceding claim, wherein the second layer comprises titanium dioxide in a range of 16 wt% - 41 wt%, optionally 20 wt% - 41 wt% or 16 wt% - 21 wt%.

5. The two-layer coating system of any preceding claim, wherein:

(a) the first layer comprises a thickness between 1.0-2.5 mils, optionally between 1.0-2.0 mils; and/or
(b) the second layer comprises a thickness between 2.0-3.6 mils, optionally between 2.4-3.2 mils.

6. The two-layer coating system of any preceding claim, wherein:

(a) the first layer blocks transmission of at least one of ultraviolet light or visible light through scattering;
(b) the second layer provides thermal control for two-layer coating system through controlled solar absorptivity; and/or
(c) the second layer provides a solar absorptivity in a range of 0.21-0.23 and/or 0.58-0.67.

7. An aircraft comprising:

an epoxy composite component; and
a two-layer coating system on the epoxy composite component, the two-layer coating system comprising:

a first layer configured to prevent transmission of at least one of ultraviolet light or visible light within desired wavelengths, the first layer comprising a polyurethane with carbon black, and
a second layer configured to reflect infrared components of sunlight, the second layer comprising a polyurethane with titanium dioxide, wherein the first layer is positioned between the second layer and the epoxy composite component.

8. The aircraft of claim 7, wherein the epoxy composite component comprises at least one of carbon fibers, boron fibers, glass fibers, or aramid fibers; optionally wherein the epoxy composite component comprises a carbon fiber-reinforced epoxy composite material and/or a glass fiber-reinforced epoxy composite material.

9. The aircraft of claim 7 or 8, wherein the epoxy composite component is one of a fuselage, a wing, or a portion of a tail section of the aircraft; optionally wherein the epoxy composite component is a horizontal stabilizer or an elevator in a tail section of the aircraft.

10. The aircraft of any one of claims 7-9, wherein: (a) the first layer comprises a thickness between 1.0-2.5 mils, optionally between 1.0-2.0 mils; and/or (b) the second layer comprises a thickness between 2.0-3.6 mils, optionally between 2.4-3.2 mils.

11. The aircraft of any one of claims 7-10, wherein the first layer comprises carbon black in a range of 0.8 wt% - 4.5 wt%.

12. The aircraft of any one of claims 7-11, wherein the second layer comprises titanium dioxide in a range of 16 wt% - 41 wt%.

13. The two-layer coating system or aircraft of any preceding claim, wherein the desired wavelengths are in a range of 300-500 nm.

14. A two-layer coating system for an epoxy composite component comprising:

a first layer configured to prevent transmission of at least one of ultraviolet light or visible light within desired wavelengths and comprising between 0.8-4.5 wt% carbon black; and

a second layer configured to provide a desired solar absorptivity and comprising between 16 wt% - 41 wt% titanium dioxide, the second layer in contact with the first layer, wherein the first layer is positioned between the second layer and the epoxy composite component.

15. The two-layer coating system of claim 14, wherein:

(a) the second layer has a desired exterior color for performance;

(b) the first layer comprises a thickness between 1.0-2.5 mils and the second layer comprises a thickness between 2.0-3.6 mils, optionally wherein the first layer comprises a thickness between 1.0-2.0 mils and the second layer comprises a thickness between 2.4-3.2 mils; and/or

(c) the desired wavelengths are in a range of 300-800 nm, optionally 300-500 nm.

FIG. 1

OPERATING ENVIRONMENT    200

SUNLIGHT
216

ULTRAVIOLET LIGHT    217

VISIBLE LIGHT    218

INFRARED COMPONENTS    220

PLATFORM    202

TWO LAYER COATING SYSTEM    210

SECOND LAYER    214

248 SOLAR ABSORPTIVITY

240 TITANIUM DIOXIDE

THERMAL CONTROL    236

238 POLYURETHANE

250 THICKNESS

DESIRED EXTERIOR COLOR    242

244 WHITE    GRAY    246

212    FIRST LAYER    234

232 THICKNESS

DESIRED WAVELENGTHS

224 CARBON BLACK

COLOR    226

228 BLACK    GRAY    230

222 POLYURETHANE

SURFACE    208

GLASS FIBER REINFORCED COMPOSITE MATERIAL    252

CARBON FIBER REINFORCED COMPOSITE MATERIAL    254

EPOXY COMPOSITE COMPONENT    206

AIRCRAFT    204

TAIL SECTION    256

258 ELEVATOR    HORIZONTAL STABILIZER    260

FIG. 2

FIG. 3

400

402 — SPECIFICATION AND DESIGN

↓

404 — MATERIAL PROCUREMENT

↓

406 — COMPONENT AND SUBASSEMBLY MANUFACTURING

↓

408 — SYSTEM INTEGRATION

↓

410 — CERTIFICATION AND DELIVERY

↓

412 — IN SERVICE

↓

414 — MAINTENANCE AND SERVICE

## FIG. 4

500

AIRCRAFT

502 — AIRFRAME      INTERIOR — 506

SYSTEMS

PROPULSION SYSTEM      ELECTRICAL SYSTEM

508      512      510      514

HYDRAULIC SYSTEM      ENVIRONMENTAL SYSTEM

504

## FIG. 5

**EUROPEAN SEARCH REPORT**

Application Number

EP 24 19 9153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 354 998 A (CHINA RAILWAY CORP; CHINA RAILWAY ERYUAN ENG GROUP ET AL.) 19 February 2019 (2019-02-19) | 1,2,5,6 | INV. C09D5/33 B05D7/00 |
| Y | * claims 1-10; examples 1-3 * | 3,4 | C08J7/04 C09D5/32 |
| X | CN 113 201 268 A (XIANGJIANG PAINT TECH CO LTD) 3 August 2021 (2021-08-03) | 14,15 | C09D7/61 C09D175/04 |
| Y | * claims 1-10; examples 1-3 * | 3,4 | |
| A | WO 2022/217279 A1 (PRC DESOTO INT INC [US]) 13 October 2022 (2022-10-13) * claims 1-31; examples 1-4 * | 1-15 | |
| A | WO 2008/097895 A2 (PPG IND OHIO INC [US]) 14 August 2008 (2008-08-14) * the whole document * | 1-15 | |
| A | US 2012/107584 A1 (EIBON WILLIAM E [US] ET AL) 3 May 2012 (2012-05-03) * the whole document * | 1-15 | |

TECHNICAL FIELDS SEARCHED (IPC)

C09D
C08J
B05D
C08K

The present search report has been drawn up for all claims

| Place of search | Date of completion of the search | Examiner |
|---|---|---|
| Munich | 11 February 2025 | Schmitt, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 9153

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2025

| Patent document cited in search report | | Publication date | Patent family member(s) | | Publication date |
|---|---|---|---|---|---|
| CN 109354998 | A | 19-02-2019 | NONE | | |
| CN 113201268 | A | 03-08-2021 | NONE | | |
| WO 2022217279 | A1 | 13-10-2022 | AU | 2022253329 A1 | 12-10-2023 |
| | | | CA | 3212886 A1 | 13-10-2022 |
| | | | CN | 117178032 A | 05-12-2023 |
| | | | EP | 4320199 A1 | 14-02-2024 |
| | | | KR | 20230159576 A | 21-11-2023 |
| | | | US | 2024240037 A1 | 18-07-2024 |
| | | | WO | 2022217279 A1 | 13-10-2022 |
| WO 2008097895 | A2 | 14-08-2008 | AR | 065192 A1 | 20-05-2009 |
| | | | AU | 2008213967 A1 | 14-08-2008 |
| | | | BR | PI0806450 A2 | 06-09-2011 |
| | | | CA | 2677255 A1 | 14-07-2008 |
| | | | CN | 101605614 A | 16-12-2009 |
| | | | EP | 2121201 A2 | 25-11-2009 |
| | | | ES | 2885754 T3 | 15-12-2021 |
| | | | JP | 5642971 B2 | 17-12-2014 |
| | | | JP | 2010517817 A | 27-05-2010 |
| | | | JP | 2013177006 A | 09-09-2013 |
| | | | KR | 20090105962 A | 07-10-2009 |
| | | | RU | 2414307 C1 | 20-03-2011 |
| | | | TW | 200848169 A | 16-12-2008 |
| | | | UA | 95511 C2 | 10-08-2011 |
| | | | US | 2008187708 A1 | 07-08-2008 |
| | | | WO | 2008097895 A2 | 14-08-2008 |
| US 2012107584 | A1 | 03-05-2012 | AU | 2011323701 A1 | 09-05-2013 |
| | | | BR | 112013010656 A2 | 09-08-2016 |
| | | | CA | 2816757 A1 | 10-05-2012 |
| | | | CN | 103221491 A | 24-07-2013 |
| | | | EP | 2635643 A1 | 11-09-2013 |
| | | | ES | 2773747 T3 | 14-07-2020 |
| | | | HK | 1187359 A1 | 04-04-2014 |
| | | | JP | 5918251 B2 | 18-05-2016 |
| | | | JP | 2014501638 A | 23-01-2014 |
| | | | KR | 20130108399 A | 02-10-2013 |
| | | | RU | 2013125494 A | 10-12-2014 |
| | | | US | 2012107584 A1 | 03-05-2012 |
| | | | WO | 2012061209 A1 | 10-05-2012 |

EPO FORM P0459

For more details about this annex : see Official Journal of the European Patent Office, No. 12/82